# EUROPEAN PATENT APPLICATION

(11) **EP 1 215 058 A2**
(43) Date of publication of application: **19.06.2002**
(21) Application number: 01310414.6
(22) Date of filing: 13.12.2001
(51) Int. Cl.: B60C 29/06

(54) **Method and apparatus for inflating objects**

(30) Priority: 15.12.2000 US 737885
(71) Applicant: Pennzoil-Quaker State Company, Houston, TX 77002 (US)
(72) Inventor: Fang, Jiafu, Spring, Texas 77388 (US); Scriven, Troy H., Waterford, New York 12118 (US)
(74) Representative: Allan, Jamie

(57) **Abstract**

A new sealant container and a tyre sealing and inflating device are described. Methods of utilising the device also are described. The new device includes a sealant container (13) with a sealant composition; but it preferably does not include an internal propellant and preferably is not aerosol-based. In use, the sealant container is connected to a flat tyre and to a pressure source (18) which provides an external propellant. As the external propellant passes through the sealant container, the sealant composition inside the sealant container is carried to a flat tyre (11). The tyre puncture is sealed by the sealant composition, and the flat tyre is inflated by the propellant.

## Description

This invention relates to a method and apparatus for inflating and sealing inflatable objects. More particularly, the invention relates to a tyre sealant container and a method and apparatus for using the sealant container.

Portable tyre sealing and inflating devices have been used in emergency by a motorist to inflate and temporarily seal a pneumatic tyre with a puncture wound when a service station or other repair facilities is not available to the motorist. The use of such devices, typically for an automobile, allows the motorist to drive the vehicle to a convenient location where the punctured or flat tyre can be inspected and repaired. The availability of such devices obviates the need for the motorist to remove the flat tyre from an automobile and replace it with a spare tyre in order to reach a service station to repair the damaged tyre. More importantly, such portable devices are extremely desirable if the motorist is stranded in a dangerous situation or if the motorist either does not have a spare tyre or is physically unable to replace the flat tyre with a spare tyre.

Generally, a portable tyre sealing and inflating device includes a conventional aerosol can containing a particular sealant composition which is introduced to the cavity of a flat tyre through a valve stem. Typically, a length of flexible tubing connects a valve on the can with a threaded nozzle and connector on the remote end for attachment to and activation of the valve stem. Alternatively, the can is supplied with a pedestal valve for activation and dispensing of the contents without flexible tubing. A propellant within the can forces the sealant composition through the opened valve and into the tyre. In this way, the tyre is inflated and sealed.

At present time, most available portable tyre sealing and inflating devices are based on aerosol, which is formed by a sealant composition and a propellant. The aerosol can include a liquefied propellant or a solubilized gas or gaseous mixture. Hence, the aerosol can is almost always under pressure. With respect to propellants, various hydrocarbons and chlorofluorocarbons have been used. It is known that hydrocarbon propellants are extremely flammable, and that chlorofluorocarbon (CFC) propellants have been found to have a detrimental effect on the earth's ozone layer and use thereof has been severely limited. Although some modified chlorofluorocarbons may not have substantial ozone-depleting potential, they may pose other environmental problems. For example, 1, 1, 2, 2-tetrafluroethane has been used as a non-flammable propellant. While not having stratospheric ozone-depletion potential, this extremely stable gas has a very significant global-warming potential (also referred to as the "green-house effect"). It is about 2,250 times as potent as carbon dioxide as a global-warming agent.

In addition to the environmental concerns, there also is a safety concern because the aerosol can is under pressure. The U.S. Department of Transportation has imposed an upper limit of 180 psig @ 130°F for interstate shipping of pressurized cans. The currently available aerosol container with the highest pressure rating is the DOT 2Q can which is designed to withstand a pressure of 180 psig @ 130°F without deformation.

It is well known that gas pressure generally is dependent upon the ambient temperature. As the ambient temperature increases, the gas pressure generally increases as well. This could have significant impact on the safety of an aerosol container. A normal storage place for a tyre sealing and the inflator device is the trunk of a motor vehicle. The temperature inside the trunk can go beyond 130°F in a hot climate. Therefore, it is possible that the aerosol can could deform and might even rupture, causing a hazardous explosion. To avoid such situations, most tyre sealing and inflating devices are pressurized to a pressure substantially less than 180 psig @ 130°F. Lower propellant pressure usually leads to a lesser amount of the propellant in the aerosol can. Therefore, an alternative design of a tyre sealing and inflating device is needed to solve this dilemma.

Compared to hydrocarbons and chlorofluorocarbons, compressed gases (e.g., carbon dioxide, nitrous oxide, nitrogen, and air) are both environmentally-acceptable and non-flammable. However, these gases, by themselves, have not been successfully used in aerosol-based tyre sealing and inflating devices. This is because relatively little of these gaseous propellants can be compressed into aerosol dispensers (regardless of the content) before the pressure exceeds 180 psig at 130°F. For example, if one injects nitrogen gas into the largest aerosol can (about 48.6 in³ capacity) until the pressure reaches 140 psig and connects this can to a relatively large P215/85R15 tyre (about 2454 in³ capacity if not flattened), the tyre pressure could raise from 0 psig to about 2.7 psig. As such, many cans of compressed nitrogen gas would be required to obtain a reasonable tyre pressure. Consequently, using compressed gases in a tyre sealing and inflating device by themselves does not appear to be a viable option.

For the foregoing reasons, there exists a need for a tyre sealing and inflating device that is not based on aerosol and thus not pressurized. It would be desirable that such a device utilizes a propellant that is relatively safe, nonflammable, and environmentally friendly.

The aforementioned need is met by one or more aspects of the invention described herein. In one aspect, the invention relates to a sealant container which includes: (1) a sealant composition inside the container; (2) an outlet port on the container for connection to an inflatable object; and (3) an inlet port on the container for connection to an external propellant. Moreover, the sealant container does not include an internal propellant and is under a pressure substantially approximate to the ambient pressure. In some embodiments, the outlet port is a dip tube.

In another aspect, the invention relates to an apparatus for inflating an inflatable object. The apparatus includes: (1) a sealant container with a sealant composition which is substantially free of an internal propellant; (2) an external propellant; (3) a first means for connecting the sealant container to an external propellant; and (4) a second means for connecting the sealant container to the inflatable object. The external propellant, the sealant container and the inflatable object are connected in such a way that at least a portion of the external propellant passes through the sealant container as it inflates the inflatable object.

In still another aspect, the invention relates to a method for inflating an inflatable object with a puncture. The method includes: (1) providing a sealant container with a sealant composition which is substantially free of an internal propellant; (2) connecting the sealant container to the inflatable object; (3) connecting the sealant container to an external propellant; and (4) inflating the inflatable object by the external propellant. At least a portion of the external propellant passes through the sealant container so that the sealant composition is delivered to the puncture by the external propellant.

Additional aspects of the invention and attendant advantages provided by embodiments of the invention become apparent with the following description.
Figure 1 is a schematic illustrating a tyre sealing and inflating device utilizing an inflated tyre to inflate a flat tyre in accordance with one embodiment of the invention.
Figure 2 is a schematic of a tyre sealing and inflating device utilizing an air compressor to inflate a flat tyre in accordance with another embodiment of the invention.

Embodiments of the invention are based, in part, on the discovery that a punctured tyre can be repaired and inflated to a desired pressure by a sealant container which does not include an internal propellant. Instead, the sealant composition inside the sealant container is delivered to the flat tyre by an external propellant, which also inflates the flat tyre. Because an external propellant is provided to deliver the sealant composition to the tyre puncture, it obviates the need for an internal propellant (although its use is not completely precluded). Consequently, aerosol-based formulations become unnecessary.

In accordance with embodiments of the invention, a sealant container for use in connection with an external propellant to inflate and seal a flat tyre is provided. The sealant container includes (1) a sealant composition inside the container; (2) an outlet port on the container for connection to an inflatable object; and (3) an inlet port on the container for connection to an external propellant. In some embodiments, the outlet port is a dip tube, although other delivery mechanisms may be used. The dip tube is used to allow the sealant composition to be delivered to an inflatable object after the sealant container is connected to an external propellant. Preferably, the sealant container should not include an internal propellant to any significant amount and be under a pressure substantially approximate the ambient pressure. The term "ambient pressure" refers to one atmosphere at about 25°C. The term "internal propellant" refers to those propellants used in an aerosol can to deliver a sealant composition and to inflate a tyre.

In contrast, an external propellant refers to an external pressure source used to deliver the sealant composition in a sealant container to a punctured tyre and to inflate the tyre.

When using the sealant container to inflate an object, any gas may be used as an external propellant; but certain preferences exist. For example, to reduce the possibility of fire or explosion, non-flammable gases preferably should be used as an external propellant. To minimize adverse environmental impact, gases with zero ozone depletion potential should be used. Preferably, they do not contribute to the green house effect. In other words, non-flammable, non-toxic, and environmentally friendly propellants are preferred as an external propellant in embodiments of the invention. They include, but are not limited to, air, nitrogen, carbon dioxide, nitrous oxide, and noble gases. Because compressed air is relatively inexpensive, it is the most preferred external propellant.

Embodiments of the invention also provide an apparatus for inflating and sealing an inflatable object. The apparatus includes: (1) a sealant container as described in the above; (2) an external propellant, (3) a first means for connecting the sealant container to an external propellant; and (4) a second means for connecting the sealant container to the inflatable object. The external propellant, the sealant container, and the inflatable object are connected in such a manner that at least a portion of the external propellant passes through the sealant container as it inflates the inflatable object. Any connection devices or means known or unknown in the art may be used to connect the sealant container to an external propellant and to any inflatable object. For example, a flexible hose or a metal tube with a valve with adapters may be used.

In accordance with embodiments of the invention, a method for inflating and sealing an inflatable object is provided. The method includes: (1) providing a sealant container as described in the above; (2) connecting the sealant container to the inflatable object; (3) connecting the sealant container to an external propellant; and (4) inflating the inflatable object by the external propellant. At least a portion of the external propellant passes through the sealant container so that the sealant composition is delivered to the puncture by the external propellant. Any connection method known in the art may be used to connect the sealant container to the inflatable object and to an external propellant. For example, when inflating a flat tyre with a puncture, an adapter/hose assembly may be used to connect the sealant container to the valve stem of the flat tyre. A flexible hose of an appropriate length may be used to connect the sealant container to a pressure source containing an external propellant, such as a properly pressurized tyre. A valve may be used between the pressure source and the sealant container. Those connection means described above also may be used.

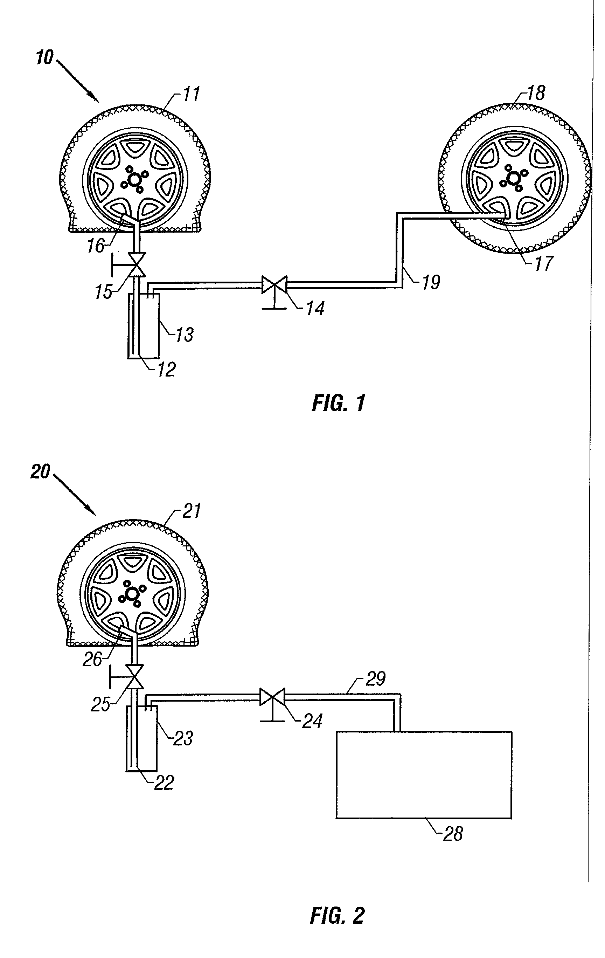

Figure 1 illustrates one embodiment of the invention in which an inflated tyre is used as a pressure source. Referring to Figure 1, the tyre sealing and inflating apparatus 10 includes a sealant container 13, a flat tyre 11, and an inflated tyre 18 as the external pressure source. In this embodiment, the inflatable object is the flat tyre 11 with a puncture. The sealant container 13 includes a sealant composition. A dip tube 12 extends from the inside to the outside of the sealant container. The dip tube 12 may include a valve 15. The dip tube 12 is connected to a tyre valve 16 of the flat tyre 11. The sealant container 13 also includes a port which is connected to the inflated tyre 18 by a hose assembly 19. The hose assembly 19 includes a valve 14 and is connected to the inflated tyre 18 via its tyre valve 17. When in use, both of the valves 14 and 15 are open. The compressed air inside the inflated tyre 18 carries the sealant composition in the sealant container 13 to the flat tyre 11 as the air passes through the sealant container 13. The air carrying the sealant composition inflates the flat tyre 11 and seals the tyre puncture.

Figure 2 illustrates another embodiment of the invention in which an air compressor is utilized as a pressure source. Referring to Figure 2, the tyre sealing and inflating apparatus 20 includes a flat tyre 21 with a puncture, a sealant container 23, and an air compressor 28. The air compressor 28 is connected to the sealant container 23 by a flexible hose assembly 29, which includes a valve 24. The sealant container 23 includes a port for such connection. A dip tube 22 extends from the inside to the outside of the sealant container 23 and is connected to a tyre valve 26 of the flat tyre 21. The dip tube 22 may include a valve 25 which is closed before use. When in use, both of the valves 24 and 25 are open. As the air compressor 28 pumps compressed air through the sealant container 23, the compressed air carries the sealant composition to the flat tyre 21 and seals the tyre puncture. In the meantime, the compressed air inflates the flat tyre 21. In addition to an air compressor, a hand pump or a foot pump may be used instead. Other pressure sources also may be used. For example, U.S. Patent Application Serial No. 09/616,360, entitled "Inflating Device and Method of Use," filed July 14, 2000, in the name of Jiafu Fang, *et al.*, discloses a gas supply by chemical reaction. Such a gas supply can be used as an external pressure source. The disclosure of the above-referenced patent application is incorporated by reference in its entirety herein. Moreover, a can of liquefied propellant or a mixture of propellants can be used as an external pressure source.

In embodiments of the invention, the sealant container need only include a sealant composition; however, other additives may be used. Suitable sealants include any composition that may be used to seal an opening in inflatable objects. For example, a suitable composition includes any polymer latex emulsion, such as styrene-butadiene rubber ("SBR") latex emulsion, or a mixture of different latex emulsions, such as SBR and acrylic latex emulsions, or high-polymer resins dissolved in an appropriate solvent system. The solvent system may be aqueous or non-aqueous. If the system is aqueous, an additional emulsion stabilizer, i.e. emulsifier or mixtures thereof, may be added to the sealant to enhance its stability under both acidic and alkaline conditions. Suitable emulsifiers include, but are not limited to, cationic surfactants or quaternary surfactants such as Arquad® , Duoquad® manufactured by Akzo Nobel, nonionic surfactants such as Triton X100® , and amphoteric surfactants such as Amphoterge® , and Amphoteric® .

In some embodiments, an anti-freeze agent, such as ethylene or propylene glycol or mixtures thereof, is used to lower the freezing point of the sealant for applications at lower ambient temperatures. In other embodiments, a fabric material, such as wood flour and synthetic or natural fibres, also is incorporated into the composition to help plug punctures on a flat tyre. Other ingredients, such as wetting agents such as Aerosol OT (i.e., sodium dis(2-ethylhexyl) sulfosuccinate), foaming agents such as Foamtaine® or defoaming agents such as Defoamer® and Dow Corning Antifoam®, corrosion inhibitors such as ammonia, sodium nitrite, and sodium chromate, and dispersing agents such as Dispex® , can be added if so desired. Table I in the following shows some exemplary sealant compositions. The listed ingredients and composition ranges are merely exemplary, and are not limitative of the invention as described herein. The numerical ranges are mere preferences, and compositions outside the numerical ranges also are acceptable. It should be understood that the numbers are approximate values.

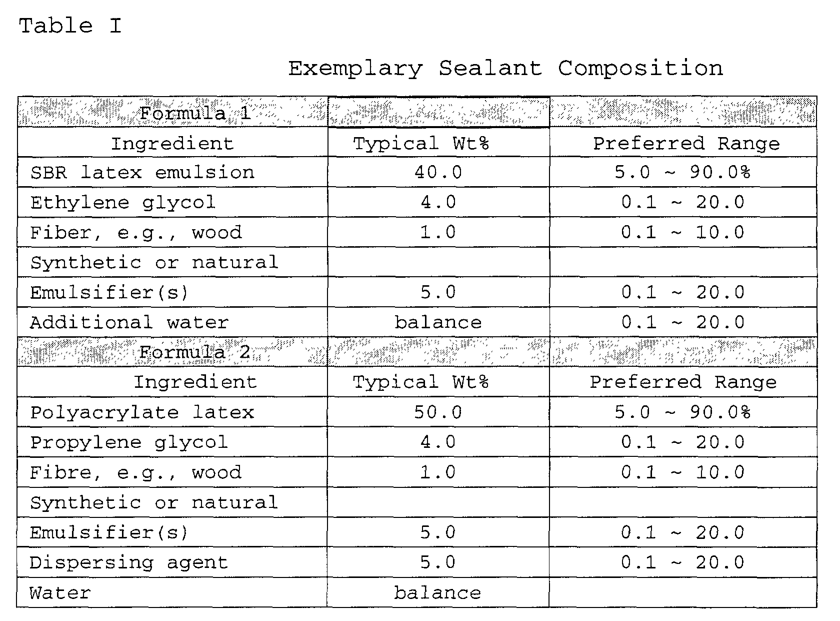

In addition, petroleum residual resins, such as petroleum resins, vacuum residuums, and asphalt may be used as a sealant. The use of a petroleum resin in a tyre sealer and inflator composition is disclosed in U.S. Patent No. 5,618,912 and U.S. Patent No. 5,705,604, and the disclosures of these two patents are incorporated by reference in its entirety herein. In addition, U.S. Patent No. 4,501,825 teaches various components suitable for a tyre sealant and the inflator composition and the disclosure of this patent is also incorporated by reference in its entirety herein. Any component suitable for formulating a tyre sealing and inflating composition as disclosed in any of the above three U.S. patents may be used in embodiments of the invention.

The following examples demonstrate methods of using the new tyre sealing and inflating device to inflate a flat tyre. These examples are given to illustrate embodiments of the invention and are not intended to limit the scope of the invention as otherwise described herein. It should be noted that any numerical values are approximate numbers.

### EXAMPLE 1

About 300 grams of a sealant composition according to Table II were packed in a container. The sealant container was connected to a flat tyre and an inflated tyre according to Figure 1. The inflated tyre had an initial pressure of about 30 psig.
After about two minutes, the flat tyre reached a pressure of about 13 psi while the inflated tyre serving as the pressure source had a pressure of about 17 psig. The vehicle with the flat tyre was then driven satisfactorily at all speeds up to about 55 mph. More air was added to the tyre to the pressure level specified by the tyre manufacturer when an air source became available.

**TABLE II**

| **Ingredient** | **Function** | **Wt.%** | **Range** |
|---|---|---|---|
| Water | Carrier | 28.2 | Balance |
| Gum xanthan | Thickener | 0.2 | 0.02∼5 |
| Synthetic rubber latex emulsion | Resin/binder | 20.0 | 2∼50 |
| Sodium dis(2-ethylhexyl) sulfosuccinate | Wetting agent | 0.1 | 0.01∼0.5 |
| Ethylene glycol | Antifreeze | 10.0 | 1∼30 |
| Fibre flock | Plug matrix | 1.0 | 0.05∼5 |
| Aqueous ammonia, 28% | Corrosion inhibitor | 0.5 | 0.01∼2 |
| Total | | 100.0 | |

### EXAMPLE 2

A sealant composition similar to the one used in Example 1 was packed in another can. The sealant container was connected to a flat tyre and an air compressor according to Figure 2. The flat tyre had a puncture made by a 16D nail. The tyre was inflated to about 28 psig. The vehicle with the flat tyre was driven, and the puncture was sealed. The test drive was satisfactory.

As demonstrated above, embodiments of the invention provide a novel tyre sealing and inflating device, which is not based on aerosol and does not include an internal propellant to any significant amount (i.e., is substantially free of an internal propellant). As such, the sealant container is not substantially pressurized. Accordingly, embodiments of the invention may offer one or more of the following advantages. First, the sealant container and the tyre sealing and inflating device are safer than conventional tyre inflators because there is no substantial pressurization during storage. This design avoids the potential problems associated with deformation or even explosion due to increase of the internal pressure. Second, the performance of the tyre sealing and inflating device is relatively independent of the ambient temperature. This is in contrast to a conventional device whose performance is strongly affected by the ambient temperature. For example, a conventional tyre inflator containing a liquefied propellant may not inflate a flat tyre in extremely cold weather due to the drop in the vapour pressure of the propellant. Such problems are eliminated in embodiments of the invention because no substantial amount of an internal propellant is used. Moreover, because no substantial amount of an internal propellant is used, costs associated with the internal propellant are reduced or completely eliminated. Hence, it is more cost-effective to manufacture the tyre sealing and inflating device in accordance with embodiments of the invention. Because the embodiments of the invention are not aerosol-based, there is no aerosol valve for a consumer to depress during use. Consequently, it is relatively easy to use the tyre inflating device. Additionally, in those embodiments which use air or nitrogen as the external propellant, the tyre sealing and inflating device is extremely environmentally friendly because neither air nor nitrogen has any adverse impact on the environment. Moreover, air or nitrogen is not flammable. Therefore, the device is safe for the consumers. Other advantages are apparent to a person of ordinary skill in the art.

While the invention has been described with respect to a limited number of embodiments, other modifications or variations exist. For example, although non-flammable, non-toxic, and environmentally friendly gases are preferred as an external propellant, any other gases which do not meet the above three requirements may still be used in embodiments of the invention. In fact, any gas may be used as an external propellant, albeit they are not preferred. While it is preferred that the pressure of the sealant container be approximate the ambient pressure, the sealant container may be slightly over-pressurized or under-pressurized. A small amount of an internal propellant may be present in the sealant container so long as an external pressure source is the main propellant. As to the method of inflating a flat tyre, any steps may be used as long as the objective of inflating a flat tyre and sealing a tyre puncture is achieved. With respect to the construction of the tyre sealing and inflating device, one or more components may be merged into another as long as they operate to achieve the results of the device. While the invention is described with respect to a flat tyre, the application the invention is not limited only to a flat tyre. Rather, the invention is applicable to any inflatable object. Such objects include, but are not limited to, inflatable boats, balloons, inflatable toys, lifesavers, etc. As to a suitable sealant composition, any sealant alone or in combination with any additives which function to seal a puncture may be used in embodiments of the invention. The appended claims are intended to cover all such modification and variations which fall within the scope of the invention.

## Claims

1. A sealant container, comprising:
a sealant composition inside the container;
an outlet port on the container for connection to an inflatable object; and
a inlet port on the container for connection to an external propellant,
wherein the sealant container does not include an internal propellant and is under a pressure substantially approximate the ambient pressure.

2. The sealant container of claim 1, wherein the outlet port is a dip tube extending from the inside to the outside of the container.

3. An apparatus for inflating an inflatable object, comprising:
a sealant container having a sealant composition, the sealant container being substantially free of an internal propellant; an external propellant;
a first means for connecting the sealant container to the external propellant; and
a second means for connecting the sealant container to the inflatable object,
wherein the external propellant, the sealant container, and the inflatable object are connected such that at least a portion of the external propellant passes through the sealant container as it inflates the inflatable object.

4. The apparatus of claim 3, wherein the first means includes a flexible hose with a valve.

5. The apparatus of claim 3 or claim 4, wherein the second means includes a dip tube with a valve, and the dip tube extends from the inside to the outside of the sealant container.

6. The apparatus of any one of claims 3-5, wherein the external propellant is provided by an air compressor.

7. The apparatus of any one of claims 3-5, wherein the external propellant is provided by an inflated tyre.

8. The apparatus of any one of claims 3-7, wherein the inflatable object is a flat tyre.

9. A method for inflating an inflatable object with a puncture, comprising:
providing a sealant container having a sealant composition, the sealant container being substantially free of an internal propellant;
connecting the sealant container to the inflatable object;
connecting the sealant container to an external propellant; and
inflating the inflatable object by the external propellant,
wherein at least a portion of the external propellant passes through the sealant container so that the sealant composition is delivered to the puncture by the external propellant.

10. The method of claim 9, wherein the sealant container includes a dip tube connected to the inflatable object.

11. The method of claim 9 or claim 10, wherein the sealant container includes an inlet port connected to the external propellant.

12. The method of any one of claims 9-11, wherein the external propellant is compressed air.

13. The method of claim 12, wherein the compressed air is stored in a can.

14. The method of claim 12, wherein the compressed air is pumped by hand.

15. The method of claim 12, wherein the compressed air from an inflated tyre.

16. The method of claim 12, wherein the compressed air is pumped by an air compressor.

17. The method of any one of claims 9-16, wherein the sealant composition includes a sealant.

18. The method of claim 17, wherein the sealant composition further includes one or more components selected from the group consisting of carrier, thickener, wetting agent, antifreeze, plug matrix, and corrosion inhibitor.

19. The method of claim 9, wherein the external propellant is nitrogen.

20. The method of claim 9, wherein the external propellant is carbon dioxide.

21. The method of any one of claims 9-20, wherein the inflatable object is a flat tyre.
